# EUROPÄISCHE PATENTSCHRIFT

(11) **EP 1 033 353 B1**
(45) Veröffentlichungstag und Bekanntmachung des Hinweises auf die Patenterteilung: **23.04.2003**
(21) Anmeldenummer: 99810188.5
(22) Anmeldetag: 04.03.1999
(51) Int. Cl.: C04B 14/32, E01C 9/00

(54) **Elektrisch leitfähiger Bodenbelag und Verfahren zur Herstellung eines solchen**
Electroconductive floor covering and process for its manufacture
Revêtement de sol électroconducteur et son procédé de réalisation

(43) Veröffentlichungstag der Anmeldung: 06.09.2000
(73) Patentinhaber: ADISA SERVICE AG, CH-8902 Urdorf (CH)
(72) Erfinder: Bachmann, Werner, 8965 Berikon (CH)
(74) Vertreter: Riederer, Conrad A., Dr.

(56) Entgegenhaltungen:
- EP-A- 0 265 822
- EP-A- 0 681 010
- EP-A- 0 693 512
- EP-A- 0 889 170
- DE-A- 3 314 505
- DE-U- 9 421 315
- FR-A- 2 216 244
- US-A- 5 118 578
- PATENT ABSTRACTS OF JAPAN vol. 014, no. 058 (M-0930), 2. Februar 1990 (1990-02-02) & JP 01 282059 A (TOKYO TATSUNO CO), 13. November 1989 (1989-11-13)
- DATABASE WPI Week 8652 Derwent Publications Ltd., London, GB; AN 86-344364 XP002109813 & JP 61 260599 A (ABC SHOKAI KK)

## Beschreibung

Die Erfindung betrifft einen elektrisch leitfähigen Bodenbelagsaufbau gemäss Oberbegriff des Patentanspruchs 1, und ein Verfahren zur Herstelleung desselben gemäss Oberbegriff des Patentanspruchs 10.

Bei Belagseinbauten, insbesondere in Bereichen, in welchen mit feuergefährlichen und explosiven Stoffen oder auf statische Ladungen empfindlichen Teilen umgegangen wird, sind die Bodenbeläge elektrisch leitfähig auszubilden und zu erden. Dieser Anforderurig stehen aber oft andere Anforderungen wie hohe Belastbarkeit, Beständigkeit gegen aggressive Chemikalien, hohe Abriebfestigkeit, kostengünstiger Einbau, kleine Schichtstärke, etc. gegenüber, welche sich z.T. widersprechen können.

Insbesondere im Tankstellenbau sind zunehmend Fahrbahnbeläge gefordert, welche einerseits dicht sind, so dass keine Flüssigkeit in den Untergrund und allenfalls ins Grundwasser gelangen kann. Andererseits sollen diese Beläge aber antistatisch, d.h. elektrisch leitfähig und geerdet sein. Die gebräuchliche Lösung, mit welcher diese beiden Anforderungen erfüllt werden, ist ein Zementüberzug mit einem Zementgehalt von wenigstens 450 kg/Tonne. Solche Zementüberzüge können nicht in dünneren Schichten als mindestens 2 bis 3 cm aufgetragen werden. Bei Sanierungen bestehender Tankstellen müssen daher die Inseln mit den Zapfsäulen ebenfalls erhöht oder der Untergrund um diese Schichtstärke abgetragen werden, um die vorgeschriebene Bordsteinkantenhöhe bei den Inseln einhalten zu können. Sie sind zudem nur dann geeignet, wenn der Untergrund keine arbeitenden Fugen aufweist, über denen der Belag brechen und dadurch undicht werden könnte. Solche Fugen zwischen nicht steif verbundenen Teilen müssen ansonsten auch im Belag ausgebildet und mit Silikon oder Gussasphalt gedichtet werden. Silikon und Gussasphalt hingegen isolieren die Belagsbereiche gegeneinander, so dass speziell auf die elektrische Ableitfähigkeit aller Bereiche geachtet werden muss. Oft sind die Haftungen dieser Materialien an den Fugenrändern ungenügend, so dass Ablösungen und Undichtheiten auftreten können. Diese Fugendichtungen müssen daher öfters erneuert werden.

Zudem sind Zementbeläge mit sehr hohem Zementanteil anfällig auf Schwindrisse. Daher müssen solche Beläge bei der Erstellung gezielt vor direkter Sonneneinstrahlung und raschem Eintrocknen geschützt werden. Sie können wegen ihrem Schwindverhalten und temperaturbedingter Ausdehnungsunterschiede im Aussenbereich auch nur innerhalb begrenzter Abmessungen ohne Fugen hergestellt werden. Die Herstellung von Zementböden ist zudem teuer und ihre Qualität nicht immer auf dem gewünschten, hohen Niveau.

Aus der US-A-5,118,578 ist ein Verfahren zur Herstellung eines elektrisch leitfähigen Bodenbelags bekannt. Dabei wird eine erste Lage aufgetragen, die aus einem anorganischen Bindemittel mit darin verteilt einem leitfähigen Pigment und einem Härter besteht. Auf diese erste Lage wird eine zweite Lage aufgetragen, die aus einem Bindemittel mit darin verteilt einem anderen leitfähigen und einem nicht leitfähigen Pigment und einem Fliessmittel besteht.

Aus der JP-A-61260599 ist ein beschichteter Boden mit guter elektrischer Leitfähigkeit für Computerräume und ähnliches bekannt. Dieser besteht aus einer leitfähigen untere Schicht, die auf einen Boden aufgetragen ist, und einer Deckschicht. Das Anstrichmaterial für die untere Schicht besitzt ein Trägermaterial aus Kunstharz und darin gleichmässig verteilt Zinkoxid mit einer Partikelform und Pigmente. Das Anstrichmaterial für die Deckschicht enthält vorzugsweise einen Kunstharz als Trägermaterial, in welchem Zinkoxid mit einer andern Partikelform gleichmässig verteilt ist, und Pigmente. Der Kunstharz ist z.B. Epoxy-Harz, AcrylHarz, Urethan-Harz oder Acryl-Urethan-Harz.

Aus der JP-A-01282059 ist ein Belagsaufbau bekannt, mit dem bei einer Tankstelle in kurzer Zeit eine hohe Sicherheit gegen elektrostatische Aufladung erreicht wird. Auf einem Asphaltbelag werden Markierungen angebracht. Dann wird ein transparenter, öldichter mit Kohlestaub oder Aluminiumstaub vermischter Epoxy-Harz aufgebracht.

Es ist Aufgabe der Erfindung, einen Belagsaufbau vorzuschlagen, welcher die zitierten Nachteile des Standes der Technik überwindet. Er soll elektrisch leitfähig, in dünnen Schichten auftragbar, hoch belastbar und abriebfest sein. Die Kosten sollen unter denen für einen Zementüberzug liegen.

Erfindungsgemäss wird die Aufgabe bei einem Bodenbelagsaufbau der eingangs erwähnten Gattung durch das Kennzeichen des Patentanspruchs 1, bzw. bei einem Verfahren der eingangs erwähnten Gattung durch das Kennzeichen des Patentanspruchs 10 gelöst. Siliziumcarbid ist ein elektrisch leitfähiges Granulat, welches zudem äusserst abriebfest ist. Es ist in unterschiedlicher Körnung auf dem Schleifmittelmarkt erhältlich. Auch wenn es wesentlich teurer als Quarzsand ist, kann der Schichtaufbau, dank der elektrischen Leitfähigkeit des Granulats komplett anders ausfallen als bei einem Zementestrich, und in der Folge wesentlich günstiger in der Herstellung sein als ein zementgebundener Vergleichsbelag.

Wenn auch das elektrisch leitfähige Granulat anstelle von Quarzsand im Zementestrich eingesetzt werden kann und dadurch eine verbesserte Leitfähigkeit des Belags erreicht wird, so wird es vorteilhaft lediglich als Einstreuung benutzt. Wenn das Granulat leitfähig ist, kann es die gesamte Oberfläche abdecken. Dies erlaubt den Einsatz von dünnschichtig aufgetragenen Verschleissbelägen mit einem Bindemittel relativ geringer Abriebfestigkeit. Daher ist das Bindemittel vorteilhaft Epoxyharz oder ein Polyurethanlack. Diese sind vorteilhaft mit elektrisch leitfähigen Füllstoffen und/oder Pigmenten elektrisch leitfähig formuliert.

Ein solches Epoxyharz kann in Schichten von 1 bis 3 mm aufgetragen werden und anschliessend mit einem leitfähigen Granulat der Korngrösse 0.1 bis 3 mm, vorzugsweise 0.3 bis 0.6 mm, eingestreut werden. Dadurch ist das weichere, nicht als abriebfeste Oberfläche geeignete Harz durch die im Fall von Siliziumcarbid äusserst resistente Schicht des harten Granulats geschützt. Ein solcher Belag ist, im Gegensatz zu einem mit Quarzsand eingestreuten Belag, dennoch sehr gut ableitend. Anstelle von Siliziumcarbid könnte auch ein elektrisch leitfähiger Kunststoff oder ein anderes leitfähiges Granulat eingesetzt werden.

Eine kostengünstigere Variante dazu ist, den Verschleissbelag durch einen 0,2 bis 0,3 mm starken Polyurethanlack mit Granulat-Bestreuung und allenfalls leitfähigem Deckanstrich zu bilden. Ein leitfähiger Deckanstrich schafft eine leitende Verbindung zwischen den Körnern des Granulats, so dass die mit Granulat bestreute Grundschicht des Verschleissbelages nicht zwangsläufig leitfähig formuliert sein muss. Zweckmässigerweise ist der elektrisch leitende Verschleissbelag an geerdete Teile angeschlossen.

Eine vorteilhafte Ausführungsform des Belags zeichnet sich durch eine flüssigkeitsdichte Sperrschicht unter dem Verschleissbelag aus. Diese kann auch elektrisch isolierend sein, wenn der Verschleissbelag elektrisch leitfähig und geerdet ist. Die Sperrschicht kann daher eine Polymerschicht, insbesondere eine Polyharnstoffschicht sein. Eine Folie aus Polyharnstoff in der Stärke von 2 bis 3 mm ist höchst reissfest, füssigkeitsundurchlässig, druckfest und elastisch. Geeignete Kunststoffschichten weisen eine Reissdehnung von wenigstens 150% auf, vorzugsweise über 200%, besonders bevorzugt zwischen 300 und 600%. Sie haben wenigstens eine Zugfestigkeit von 4, vorzugsweise über 6, besonders bevorzugt zwischen 8 und 15 N/mm². Mit einer solchen Schicht können Fugen bis zu 3 mm überbrückt werden. Sie ist zudem vorzugsweise weitgehend stoffresistent. Insbesondere Benzin, Öle und Fette sollen sie ebensowenig wie Salze und Säuren angreifen. Polyharnstoffe z.B. erfüllen diese Forderungen.

Wenn die Folie grundsätzlich auch mit dem Untergrund verklebt werden könnte, so wird vorgezogen, dass sie direkt auf den Untergrund aufgetragen wird. Es ist auch denkbar, eine Einkomponenten-Folie flüssig aufzutragen. Diese braucht lediglich längere Aushärtzeiten und ist in der Regel weniger stoffbeständig als eine Zweikomponenten-Folie. Vorteilhaft ist die Sperrschicht daher eine örtlich flüssig aufgetragene Zweikomponenten-Folie.

Zwischen Untergrund und Verschleissbelag, bzw. zwischen Untergrund und Sperrschicht, bzw. zwischen Sperrschicht und Verschleissbelag ist vorteilhaft eine besandete Haftbrücke vorgesehen. Diese gewährleistet durch die Wahl des Mittels eine optimale Haftung am Untergrund und durch die Besandung eine mechanische Verzahnung mit der darüber angeordneten Schicht.

Bei einem Verfahren zum Aufbau eines elektrisch leitfähigen Verschleissbelags auf einem tragfähigen Untergrund wird erfindungsgemäss der dafür vorbereitete Untergrund mit einer Bindemittelschicht bedeckt und die Bindemittelschicht danach mit einem elektrisch leitfähigen Granulat eingestreut. Das Bindemittel ist vorteilhaft elektrisch leitfähig formuliert. Zur Vorbereitung des Untergrunds wird dieser gereinigt, z.B. kugelgestrahlt, vorteilhaft mit einer Haftbrücke versehen, und diese Haftbrücke eingesandet.

In einer Weiterentwicklung der Erfindung wird auf den vorbereiteten Untergrund eine Flüssigkeitsdichtung erstellt. Diese wird vorteilhaft durch Aufspritzen von zwei Komponenten, welche miteinander reagierend sich zu einer Polymerschicht verbinden, hergestellt. Bevorzugt wird eine Polyharnstoffschicht.

Aufeinander abgestimmte Produkte sind z.B.:
Je nach Untergrund (17) eignet sich ein Zweikomponenten-Epoxyharz als Primer (auf einem Betonuntergrund oder einem Asphaltuntergrund) oder eine mit Korrosionsschutzpigmenten und Füllstoffen formulierte Zweikomponenten Grundierung auf der Basis von Epoxy-Polyurethanharz (auf einem Metalluntergrund);
als Sperrschicht darüber eignet sich eine Zweikomponenten-Polyharnstoff-Spritzfolie;
als Haftgrund auf der Sperrschicht ein Zweikomponenten-Polyurethanlack, allenfalls mit Pigmenten und/oder Füllstoffen leitfähig gemacht;
Quarzsand mit Korngrösse 0.3 bis 0.8 mm eignet sich als Einstreuung auf Primer und Haftgrund;
ein Polyurethanlack oder ein Epoxyharz sind geeignet als Grundschicht des Verschleissbelags über dem eingesandeten Haftgrund; vorteilhaft ist Das Material dieser Grundschicht mit leitfähigen Pigmenten und/oder Füllstoffen leitfähig formuliert.

Siliziumcarbid kann als Einstreugranulat auch in einen Haftgrund Verwendung finden. Erfindungsgemäss wird jedoch Siliziumcarbid insbesondere auf die Grundschicht des Verschleissbelags gestreut. Ein mit leitfähigen Pigmenten und/oder Füllstoffen formulierter Polyurethanlack oder ein leitfähiger Lack aus Epoxy-Polyurethanharz kann als elektrisch leitfähiger Deckanstrich über dem Granulat dienen.

Für einen kräftigeren Verschleissbelag wird das Epoxyharz in einer Schichtstärke von 1 bis 3 mm und eine Einstreuung aus Siliziumcarbid der Korngrösse bis 3 mm, vorzugsweise 0.3 bis 0.6 mm, bevorzugt. Darüber ist ein Deckanstrich aus einem leitfähig formulierten Epoxy-Polyurethanharz zweckmässig, aber nicht zwingend.

Im Folgenden wird die Erfindung anhand von in den Figuren dargestellten Ausführungsbeispielen näher erläutert. Es zeigt:
- Fig. 1: einen Belagsaufbau mit einem minimalen Verschleissbelag,
- Fig. 2: ein Belagsaufbau mit einem mächtigeren Verschleissbelag ohne Sperrschicht,
- Fig. 3: ein vereinfachte Variante zum Belagsaufbau gem. Fig. 1.

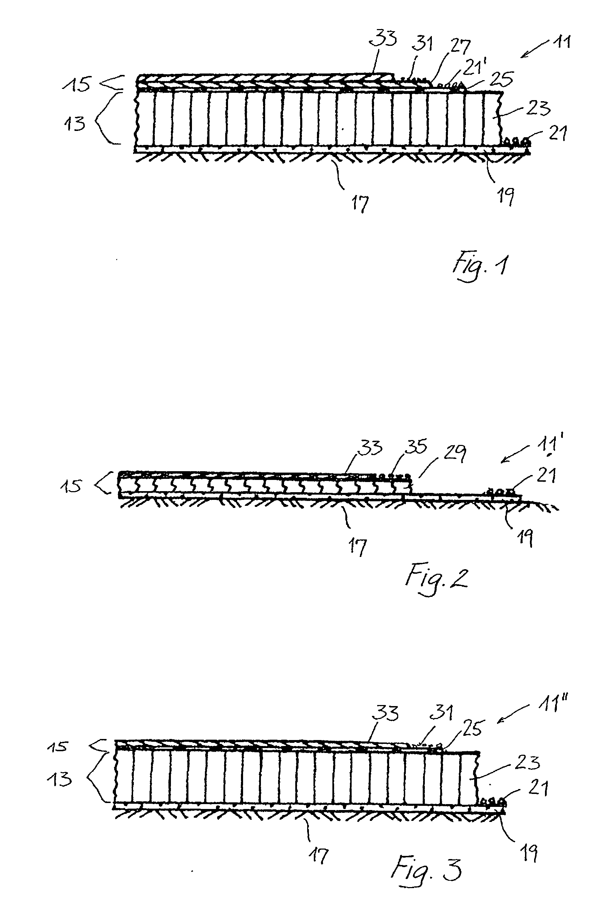

Der Belagsaufbau weist einen Verschleissbelag aus einer Bindemittelschicht (25,27,29) und einem eingestreuten Granulat (31,35) auf. Dieser kann direkt auf den tragenden Untergrund (17) oder aber über einer flüssigkeitsdichten Sperrschicht (23) angebracht sein. Die in den Figuren 1 und 3 dargestellten Belagsaufbauten 11 und 11" weisen eine für Flüssigkeit undurchlässige Sperrschicht 13 auf. Diese Sperrschicht 13 ist nicht leitend. Dadurch tritt die Aufgabe des elektrisch leitfähigen Verschleissbelags 15 noch deutlicher in den Vordergrund. Der erfindungsgemässe Verschleissbelag 15 kann z.B. aber auch direkt über dem tragenden Untergrund 17 (Figur 2) angebracht sein.

In Figur 1 und 3 besteht der Aufbau aus folgenden Schichten. Auf dem tragenden Grund 17, einer Betonplatte, ist ein auf den Grund 17 abgestimmter Primer 19 (z.B. ein Zweikomponenten-Epoxyharz) aufgerollert. Diese Grundierung 19 dient der besseren Haftung der darüber angeordneten Schichten auf dem tragenden Grund 17. Die Quarzsandkörner 21 sind dadurch im Primer 19 eingebettet, da sie in den "nassen" Primer 19 eingestreut wurden. Die Besandung 21 bewirkt eine mechanische Verzahnung zwischen zwei Schichten, hier zwischen der oberen Sperrschicht 23 und dem tragenden Untergrund 17.

Auf die besandete Oberfläche des trockenen Epoxyharzes 19 ist eine elastomere Polyharnstoff-Zweikomponenten-Folie 23 aufgespritzt. Alternativ kann die Folie 23 auch gegossen oder gespachtelt sein. Der Polyharnstoff bindet innerhalb von wenigen Minuten ab, so dass der Arbeitsablauf bei der Herstellung des Belags nicht unterbrochen werden muss. Die kalthärtende, dauerelastische Folie bildet eine flüssigkeitsundurchlässige Sperrschicht mit hoher Verschleissfestigkeit, hoher Tragfähigkeit (auch bei dynamischer Belastung) und hohem Einreisswiderstand.

Die Folie 23 ihrerseits ist auf der Oberseite mit einem Haftanstrich 25 aus einem Zweikomponenten-Polyurethanlack versehen. Dieser ist wie der Primer 19 mit Quarzsand 21' der Korngrösse 0,3 bis 0,8 mm besandet. Die Komponenten des Belagaufbaus unter dem Verschleissbelag brauchen nicht elektrisch leitfähig zu sein. Die Folie aus Polyharnstoff bildet ohnehin eine elektrisch isolierende Schicht. Daher kann gut auch nicht leitender Quarzsand zum Besanden der Haftanstriche 19 und 25 verwendet werden.

Der Belagsaufbau in den Figuren 1 und 3 unterscheidet sich lediglich im Verschleissbelag 15 über dem besandeten Haftanstrich 25.

Figur 1 zeigt eine Variante mit einer auf die besandete Haftbrücke 25 aufgetragenen, 0,2 bis 0,3 mm starken, elektrisch leitenden Grundschicht 27 aus einem mit leitfähigen Füll- und/oder Farbstoffen formulierten Zweikomponenten-Polyurethanlack. Die Grundschicht 27, welche z.B. aufgerollert ist, ist mit Siliziumcarbid 31 der Korngrösse 0.1 bis 0.35 bestreut. Dieses leitende Granulat 31 ist anschliessend mit einer Deckschicht 33 aus einem leitfähig formulierten Epoxy-Polyurethan-Lack überzogen. Diese Deckschicht 33 kann auch weggelassen werden.

In Figur 3 ist eine Aufbauvariante dargestellt, bei welcher unmittelbar auf die Sperrschicht 23 ein Zweikomponentenlack 19, vorzugsweise auf Polyurethanbasis, aufgebracht und mit Siliziumcarbid 31 bestreut ist. Dieser Lack muss nicht leitfähig sein, wenn darüber ein Deckanstrich als Versiegelung aus einem mit leitfähigen Pigmenten und Füllstoffen formulierten Zweikomponentenlack aufgebracht ist. Der Lack der Versiegelung basiert vorzugsweise auf einem Epoxy-Polyurethanharz.

Dagegen zeigt die Figur 2 die aufwendigere und belastbarere Variante des Verschleissbelags mit einer dank leitfähigen Füll- und Farbstoffen ebenfalls leitenden Grundschicht 29 aus Epoxyharz. Die Grundschicht 29 ist mit Siliziumcarbid 35 der Korngrösse 0.3 bis 0.6 mm besplittet. Dieses Granulat 35 ist mit einer Deckanstrich 33 aus einem leitfähig formulierten Zweikomponentenlack auf der Basis von Epoxy-Polyurethanharz versehen, um den Verbund der Oberfläche zu erhöhen. Auch hier muss die Deckschicht 33 nicht zwingend ausgeführt werden.

Zusammenfassend kann gesagt werden, dass zur Herstellung eines elektrisch leitfähigen, befahrbaren Bodenbelages eine Schicht aus einer, vorzugsweise polymeren, Grundschicht 27,29 mit elektrisch leitfähigem Granulat 31,35, vorzugsweise Siliziumcarbid, eingestreut wird. Das Granulat 31,35 wird allenfalls mit einer leitfähigen Bindemittelschicht überzogen. Vorteilhaft ist die Grundschicht 27,29 elektrisch leitfähig. Eine Flüssigkeitssperrschicht 23 kann darunter in Form einer Spritzfolie angeordnet sein. Zur Verbesserung der mechanischen Verbindung der Schichten können vorzugsweise besandete Haftanstrichen 19,25 zwischen diesen angeordnet sein.

## Patentansprüche

1. Elektrisch leitfähiger Bodenbelagsaufbau (11,11') über einem tragenden Untergrund (17), mit einem befahrbaren, abriebfesten, elektrisch leitfähigen Verschleissbelag (15,), welcher eine Bindemittelschicht und ein vom Bindemittel (25,27,29) gebundenes elektrisch leitfähiges Granulat (31,35) aufweist, **dadurch gekennzeichnet, dass** das Granulat (31,35) in die Oberfläche der Bindemittelschicht (25,27,29) eingestreut ist.

2. Bodenbelagsaufbau nach Anspruch 1, **dadurch gekennzeichnet, dass** das elektrisch leitfähige Granulat (31,35) Siliziumcarbid ist.

3. Bodenbelagsaufbau nach Anspruch 1 oder 2, **dadurch gekennzeichnet, dass** das Bindemittel (29) ein mit elektrisch leitfähigen Füll- und/oder Farbstoffen formuliertes Epoxyharz ist.

4. Bodenbelagsaufbau nach Anspruch 1 oder 2, **dadurch gekennzeichnet, dass** das Bindemittel (27) ein mit elektrisch leitfähigen Füll- und/oder Farbstoffen formulierter Polyurethanlack ist.

5. Bodenbelagsaufbau nach einem der Ansprüche 1 bis 4, **gekennzeichnet durch** eine flüssigkeitsdichte Sperrschicht (23) unter dem Verschleissbelag (15,).

6. Bodenbelagsaufbau nach Anspruch 5, **dadurch gekennzeichnet, dass** die Sperrschicht (23) eine Polymerschicht ist, insbesondere eine Polyharnstoffschicht.

7. Bodenbelagsaufbau nach Anspruch 5 oder 6, **dadurch gekennzeichnet, dass** die Sperrschicht (23) eine örtlich flüssig aufgetragene Zweikomponenten-Folie ist.

8. Bodenbelagsaufbau nach einem der Ansprüche 1 bis 7, **dadurch gekennzeichnet, dass** zwischen Untergrund (17) und Verschleissbelag (15,), bzw. zwischen Untergrund (17) und Sperrschicht (23), bzw. zwischen Sperrschicht (23) und Verschleissbelag (15,) eine besandete Haftbrücke (19,21/25,21') vorgesehen ist.

9. Bodenbelagsaufbau nach einem der Ansprüche 1 bis 8, **gekennzeichnet durch** eine Deckschicht über dem Granulat aus einem elektrisch leitfähig formulierten Polyurethanlack oder vorzugsweise Epoxy-Polyurethanlack.

10. Verfahren zum Aufbau eines Bodenbelagsaufbaus gemäss Anspruch 1 mit einem elektrisch leitfähigen Verschleissbelag (15,) auf einem tragfähigen Untergrund (17), **dadurch gekennzeichnet, dass** der dafür vorbereitete Untergrund (17) mit einer Bindemittelschicht (27,29) bedeckt wird und die Bindemittelschicht (27,29) mit einem elektrisch leitfähigen Granulat (31,35), insbesondere Siliziumcarbid, eingestreut wird.

11. Verfahren nach Anspruch 10, **dadurch gekennzeichnet**, das Granulat (31,35) mit einem elektrisch leitfähig formulierten Lack versiegelt wird.

## Claims

1. Electrically conductive floor cover structure (11, 11') over a load-bearing base (17), with a traversable, abrasion-resistant, electrically conductive wearing cover (15,), which comprises a binder layer and electrically conductive granulated material (31, 35) bonded by the binder (25, 27, 29), **characterised in that** the granulated material (31, 35) is sprinkled into the surface of the binder layer (25, 27, 29).

2. Floor cover structure according to claim 1, **characterised in that** the electrically conductive granulated material (31, 35) is silicon carbide.

3. Floor cover structure according to claim 1 or 2, **characterised in that** the binder (29) is an epoxy resin formulated with electrically conductive fillers and/or dyes.

4. Floor cover structure according to claim 1 or 2, **characterised in that** the binder (27) is a polyurethane paint formulated with electrically conductive fillers and/or dyes.

5. Floor cover structure according to any one of claims 1 to 4, **characterised by** a liquid-proof barrier layer (23) beneath the wearing cover (15,).

6. Floor cover structure according to claim 5, **characterised in that** the barrier layer (23) is a polymer layer, in particular a polyurea layer.

7. Floor cover structure according to claim 5 or 6, **characterised in that** the barrier layer (23) is a two-component film applied as a liquid in certain places.

8. Floor cover structure according to any one of claims 1 to 7, **characterised in that** between base (17) and wearing cover (15,), or between base (17) and barrier layer (23), or between barrier layer (23) and wearing cover (15,) a sand-surfaced bonding layer (19, 21/25, 21') is provided.

9. Floor cover structure according to any one of claims 1 to 8, **characterised by** a top coat above the granulated material consisting of an electrícally conductive formulated polyurethane paint or preferably epoxypolyurethane paint.

10. Method for constructing a floor cover structure according to claim 1 with an electrically conductive wearing cover (15,) on a load-bearing base (17), **characterised in that** the base (17) prepared for the latter is covered with a binder layer (27, 29) and the binder layer (27, 29) is sprinkled with electrically conductive granulated material (31, 35), in particular silicon carbide.

11. Method according to claim 10, **characterised in that** the granulated material (31, 35) is sealed with an electrically conductive formulated paint.

## Revendications

1. Structure de revêtement de sol (11, 11') électro-conductrice sur un fond (17) porteur, comprenant un revêtement anti-usure (15) électro-conducteur, carrossable et résistant à l'abrasion, qui comporte une couche de liant et un granulat (31, 35) électro-conducteur aggloméré par le liant (25, 27, 29), **caractérisée en ce que** le granulat (31, 35) est répandu dans la surface de la couche de liant (25, 27, 29).

2. Structure de revêtement de sol électro-conductrice selon la revendication 1, **caractérisée en ce que** le granulat électro-conducteur (31, 35) est du carbure de silicium.

3. Structure de revêtement de sol électro-conductrice selon la revendication 1 ou 2, **caractérisée en ce que** le liant (29) est une résine époxy, dont la formule contient des matières de charge et/ou des matières colorantes électro-conductrices.

4. Structure de revêtement de sol électro-conductrice selon la revendication 1 ou 2, **caractérisée en ce que** le liant (27) est un vernis polyuréthanne, dont la formule contient des matières de charge et/ou des matières colorantes électro-conductrices.

5. Structure de revêtement de sol électro-conductrice selon une des revendications 1 à 4, **caractérisée par** une couche isolante (23) étanche aux liquides, agencée sous le revêtement anti-usure (15).

6. Structure de revêtement de sol électro-conductrice selon la revendication 5, **caractérisée en ce que** la couche isolante (23) est une couche polymère, en particulier une couche de polycarbamide.

7. Structure de revêtement de sol électro-conductrice selon la revendication 5 ou 6, **caractérisée en ce que** la couche isolante (23) est une feuille à deux composants déposée localement sous forme liquide.

8. Structure de revêtement de sol électro-conductrice selon l'une des revendications 1 à 7, **caractérisée en ce qu'**il est prévu un pont d'adhérence (19, 21 / 25, 21') sablé entre le fond (17) et le revêtement anti-usure (15), ou entre le fond (17) et la couche isolante (23) ou entre la couche isolante (23) et le revêtement anti-usure (15).

9. Structure de revêtement de sol électro-conductrice selon une des revendications 1 à 8, **caractérisée par** une couche de protection au-dessus du granulat, réalisée en vernis polyuréthanne ou, de préférence, en vernis polyuréthanneépoxy, dont la formule contient des matières électro-conductrices.

10. Procédé pour réaliser une structure de revêtement de sol électro-conductrice selon la revendication 1 comprenant un revêtement anti-usure (15) sur un fond (17) porteur, **caractérisé en ce que** le fond (17) préparé à cet effet est recouvert par une couche de liant (27, 29) et la couche de liant (27, 29) contient un granulat (31, 35) électro-conducteur, en particulier du carbure de silicium, répandu dans ladite couche de liant.

11. Procédé selon la revendication 10, **caractérisé en ce que** le granulat (31, 35) est scellé par un vernis, dont la formule contient des matières électro-conductrices.
